# EUROPEAN PATENT APPLICATION

(11) **EP 3 772 699 A1**
(43) Date of publication of application: **10.02.2021**
(21) Application number: 19190951.4
(22) Date of filing: 09.08.2019
(51) Int. Cl.: G06F 21/32

(54) **METHOD FOR USER VERIFICATION, COMMUNICATION DEVICE AND COMPUTER PROGRAM**

(71) Applicant: Siemens Aktiengesellschaft, 80333 München (DE)
(72) Inventor: Gasiba, Tiago, 81549 München (DE)

(57) **Abstract**

Verification of a user is done by comparing a predetermined dataset with an acquired dataset. These datasets are images of the user to be verified. The method obtains these images by means of the camera of a communication device. In case of positive verification, a certain computer object is performed.

This automated solution obviates the need of a human witness.

## Description

The present invention relates to the verification of a user of a computerized device or a software.

Many systems require an act of acceptance by a user e.g. when a EULA (End User License Agreement) of a newly installed software package is to be accepted by the user of the software. An act of acceptance may also be required for other contracts like online purchases. Not only may an act of acceptance be required, but also a previous activity of the user, like reading and understanding of contractual obligations. In many cases, this is achieved by making the user click a button which is inscribed "I accept" or "Order now". Further, many of these same or other systems require a user login (e.g. by giving credentials "username" and "password") or a certain activity like unlocking of a mobile communication device.

There is often insecurity if the act of acceptance, the login or the unlocking of a mobile device have indeed been performed by a human, or if the act of acceptance, the login or the unlocking have been performed by the correct person, because the act of acceptance, the login or the unlocking may also have been performed fraudulently.

It is one object of the present invention to provide an improvement on current methods to verify the act of acceptance, the login or the unlocking of a mobile device.

Accordingly, a method is suggested to verify a user of a first computer object comprising:
obtaining a first dataset with a camera;
comparing the first dataset with a first predetermined dataset; and
activating the first computer object if the result of comparing the first dataset with the predetermined dataset is positive and activating a second computer object different from the first computer object if the comparison of the first dataset with the first predetermined dataset is negative.

The verification of the user may be achieved by comparing an image of the person who is currently in front of the camera of the computerized device which is to execute the computer objects to an image of the user which has been recorded previously. If the comparison results in identification of the same person as the person which had been pictured in the pre-recorded image, the "I Accept" or the "Order Now" button which are examples of the first computer object become activated as the result. Otherwise, if a different person is found in the image from the camera, the second computer object becomes activated. This second computer object may encompass displaying a message like: Access denied.

According to an embodiment, in this method to verify a user of a first computer object the step of comparing is done by facial recognition.

Such a comparison may be achieved by using facial recognition of an image of the person who is currently in front of the camera of the computerized device which is to execute the computer objects. The image which is currently being recorded is compared to an image which has been recorded previously by standard facial recognition methods. If the facial recognition results in identification of the same person as the person which had been pictured in the pre-recorded image, the "I Accept" or the "Order Now" button which are examples of the first computer object become activated as the result.

According to a further embodiment, the step of comparing is done by eye tracking.

It may be a further requirement to verify that the user also reads through a certain EULA or other contract before the first computer object becomes activated. The image provided by the camera may be processed with use of eye tracking methods. In this way, the camera image of the user can not only used for identification, but also as a proof that a certain action, like reading through a contract has been performed by the user before the first computer object becomes activated. This can be achieved by tracking the eyes of the user if they are directed to the monitor which is displaying the contract. The direction of the eyes may be detected in conjunction with a scrolling action, which may become necessary if the contract requires more than the allotted area on the screen, so that the whole content cannot be displayed at the same time. Eye tracking methods can be applied on still images or on a video recording.

According to a further embodiment, the predetermined data pattern is a sequence of motions of the user.

As an additional security step, the data acquired by the camera in the identification process can be enhanced by a sequence of motions. Such a sequence of motions may comprise from an initial position facing the camera, turning the head to the left, then turning the head back towards the camera, then turning the head down in a nodding movement. Of course, many additions and variations of this sequence are possible. Again, the recording of the motions of the user may be stored as a series of still images or as a video when it is being processed for verification.

According to a further embodiment, motions in the sequence of motions of the user are motions of a hand of the user holding a handheld device.

If the described method is being used in conjunction with a handheld pointing device like a mouse or in conjunction with a smartphone, a pattern like the unlocking pattern of a smartphone may be displayed on the display monitor. The user is then requested to follow this pattern with the mouse pointer. If the described method is being used to unlock a handheld device like a smartphone, the user may then be required to move the whole smartphone together with the hand holding the phone following an unlocking pattern as described above.

According to a further embodiment, the motions of the hand of the user are sensed by an accelerometer.

In the embodiment described above in the context of the unlocking of a smartphone, the MEMS accelerometer sensor as it is incorporated in many smartphones is being used in order to track the movements of the user. These hand movements will be performed with the hand holding the smartphone. Thus, the accelerometer in the smartphone is suitable for tracking the movements of the hand.

According to a further embodiment, the first obtained dataset is stored as a still photographic image or a video sequence.

As proof e.g. in the case of later claims or other discussions between user and a provider, a photographic image acquired by the camera at the time of the activation of the first computer object may be stored. If a photographic image is not considered sufficient, as further evidence, a series of motions may be recorded by the camera. The resulting data may be stored e.g. as a video in mp4, avi or other format.

According to a further embodiment, in the case that the comparison of data with the predetermined data pattern is negative, the second computer object different from the first computer object is an alarm.

If a user is coerced by criminal elements to identify himself in one of the methods described above, in the case that the first data object comprises a series of motions of the user, the user may perform a different predetermined set of motions from the set of motions encompassed by the first predetermined dataset. This predetermined set of motions will then be identified in the comparing process step. The second computer object may then induce program steps which notify the provider or authorities about the breach by sending an alarm message. Such an alarm message can be sent without creating any visible traces on the screen. In this way, the criminal elements are not alerted that their actions have been reported.

According to a further embodiment, the method comprises the additional step of comparing a second acquired dataset with a second predetermined dataset if the result of the step of comparing of the first acquired dataset with the first predetermined dataset is positive.

In many devices, a fingerprint sensor is available. Data obtained with this fingerprint sensor can be obtained in addition to camera data. If data from two sources, namely the camera and the fingerprint sensor are being used to verify the user's intent, the security level is heightened.

According to a further embodiment, if the comparison of data with the predetermined data pattern is positive, the first computer object is activated with a time delay.

In the case that the method using eye tracking is not used, e.g. for the reason that this method too requires too much computing power or if this method cannot be performed because of the available image quality of the camera, the act of reading of a certain document or the act of viewing a certain video can be safeguarded at least to a certain degree by delaying the activation of the first computer object for an estimated time required to read the respective document or by the duration of the video. This time delay may also be performed in addition to the eye tracking method.

According to a further embodiment, a user who is visually impaired is performing the sequence of motions.

In this way, the method can be used to verify a user who is visually impaired. If a visually impaired user is, for example, trying to unlock a smartphone for further use, the user may perform the sequence of motions with his hand while holding the smartphone in this hand. The accelerometer in the smartphone may then be used to detect if the sequence of motions is performed correctly.

Any embodiment of the first aspect may be combined with any embodiment of the first aspect to obtain another embodiment of the first aspect.

According to a further aspect, the invention relates to a communication device which is adapted to perform the method described above.

According to a further aspect, the invention relates to a computer program product comprising a program code for executing the above-described method to verify a user when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a user who is performing the method;
Fig. 2 shows a different user who is performing the method;
Fig. 3 a flowchart with an implementation of the method;
Fig. 4 a flowchart with another implementation of the method;
Fig. 5 - 10 an implementation of the method for a smartphone being unlocked; and
Fig. 11 a flowchart with a further implementation of the method.

In the Figures, like reference numerals designate like or functionally equivalent elements, unless otherwise indicated.

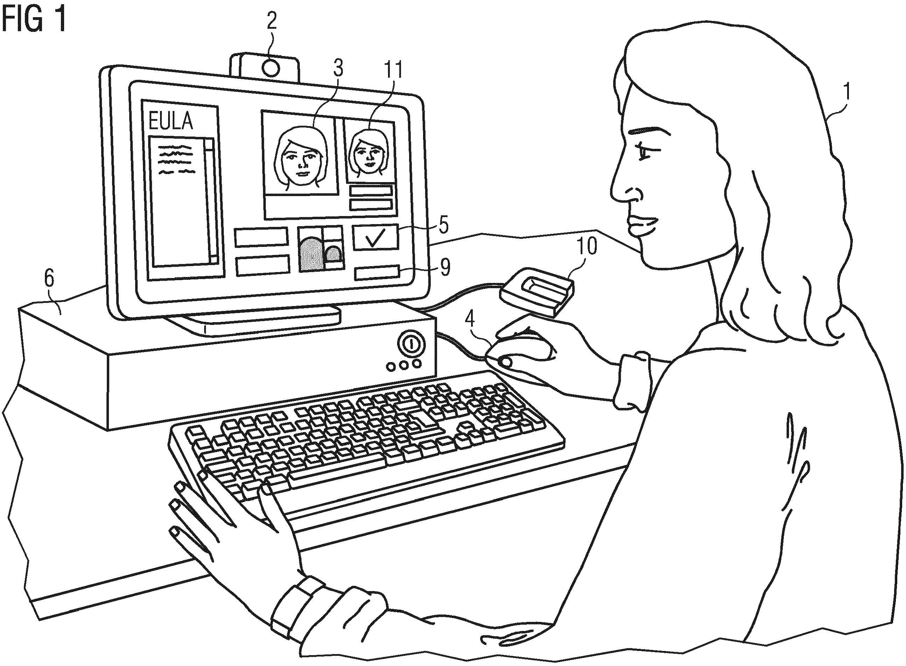

Fig 1 shows a user 1 in front of a communication device 6. The communication device 6 is equipped with a monitor, on top of which a camera 2 is mounted. The communication device 6 is connected to a handheld device 4 like a mouse. Further, a fingerprint sensor 10 is also connected to the communication device 6. The image recorded by means of the camera 2 is displayed on the monitor as the first acquired dataset 3. In the communication device 6, a first predetermined dataset 11 has been stored previously. Next to the dataset 3 showing the camera image, this first predetermined dataset 11 is also displayed on the monitor.

A fingerprint of the user 1 has just been recorded with the fingerprint sensor 10 and is displayed as second acquired dataset 12. Next to the image 12 of the fingerprint, the monitor displays a second predetermined dataset 13 which may be a recording taken earlier by means of the fingerprint sensor 10 or data obtained from the hard disc of the computer.

Further, there is an End User License Agreement (EULA) displayed on the left part of the monitor. Such a EULA is often displayed at a certain time during the installation process of a software. The user has just finished reading the EULA. In the current example, at the time of the purchase of the software, the user 1 has submitted his or her image as the first predetermined dataset 11. Further, the user may have also presented fingerprint data like the second predetermined dataset 13 at the time of the purchase of the software.

At the time of the purchase of the software, at least a first predetermined dataset 11 which may be a photograph of the intended user 1 was stored in the verification system. The purpose of this verification system is to verify if the person undertaking the steps for verification is indeed entitled to the use of the software. This verification system may be an identification program running on the communication device 6, which may be a personal computer with an internet connection. However, it may also be a license administration program administered by the provider of the software who is running the system on a server which is connected to the communication device via the internet. Depending on the implementation, a second predetermined dataset 13, which may be recorded data of a fingerprint of the user 1, may also be stored in the verification system. If the verification system is running on a server of the provider of the software, the verification system will usually have its user interface in an internet browser running on the communication system 6.

Returning to Fig.1, a situation is depicted at a time when the user 1 has just finished reading the EULA. Thus, the verification system is now obtaining the first acquired dataset 3 with the camera 2. Then, it is performing the step of comparing the first acquired dataset 3 with the first predetermined dataset 11. If the result of this comparison of the first acquired dataset 3 with the predetermined dataset 11 is positive, the verification system proceeds by activating a first computer object 5. In this case, this first computer object is a button. This button indicates with a checkmark that the verification process has been successful. After finishing the installation process the software is now ready to be executed by the user 1.

Additionally, in Fig. 1 there is also a second predetermined dataset 13 displayed which is a recording of a fingerprint of the user 1. After the user has finished reading the EULA, the verification system may require that the user puts the same finger on the fingerprint sensor 10. Then, the result of the fingerprint sensing is displayed on the monitor of the communication device 6 as the second acquired dataset 12. Next, the verification system is performing the step of comparing the second acquired dataset 12 obtained from the fingerprint sensor 10 with a second predetermined dataset 13. In this example, the activation of the first computer object 5 may now also depend on a positive result of the comparison between the second acquired dataset and the second predetermined dataset.

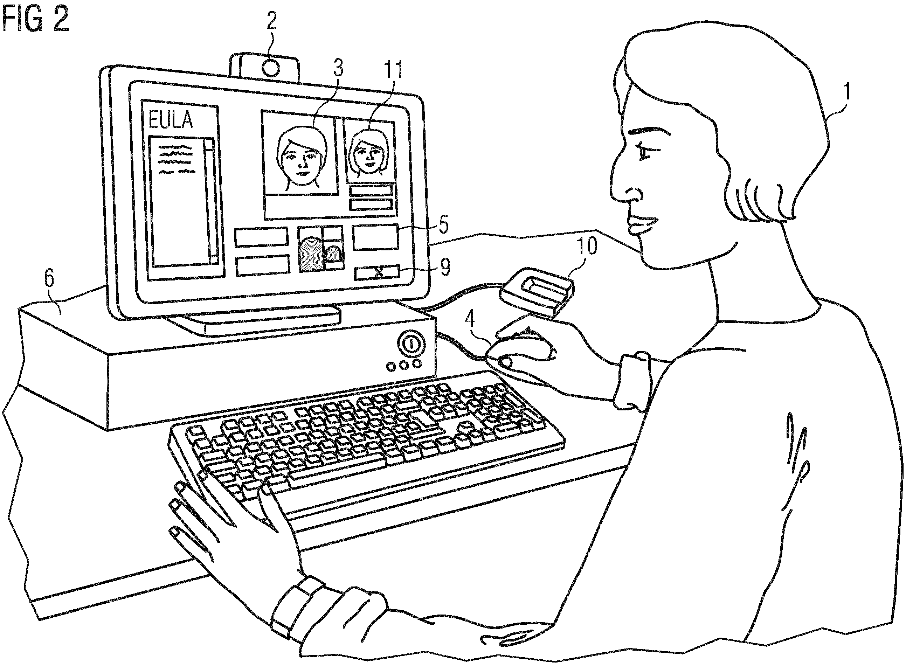

Fig. 2 has a similar situation, but this time a person 19 is shown. This person 19 is different from the intended user 1 of the software who is shown in Fig. 1. In the depiction of Figs. 1 and 2, the difference in the facial features of these two persons has been restricted to the nose for reasons of simplicity. Again, the verification system is performing the step of obtaining the first acquired dataset with the camera 2. As this dataset is different from the dataset 3 in Fig. 1, it has reference numeral 23. Then, the verification system is performing the step of comparing the first acquired dataset 23 with the first predetermined dataset 11. Now, the result of this comparison of the first acquired dataset 23 with the predetermined dataset 11 is negative. Correspondingly, the verification system proceeds by activating a second computer object 9. In this case, this second computer object 9 is also a button. This button indicates with a cross that the verification process has not been successful. Thereupon, the verification system may terminate the installation of the software or recommend to repeat the installation process for a different user.

Again, as shown in Fig. 2, the verification system may also obtain fingerprint data i.e. a second acquired dataset 22 from the user 19 and compare this second acquired dataset 22 with the second predetermined dataset 13.

A preferred method according to the description above in connection with Figs. 1 and 2 is using face recognition in order to compare the first acquired dataset and the first predetermined dataset. This is done in order to ascertain that the software in question is being used by the person who is intended to use it.

Another preferred method according to the description above in connection with Figs. 1 and 2 is using eye tracking in order to compare the first acquired dataset and the first predetermined dataset. Eye tracking methods are especially useful in order to ascertain that the user has actually laid eyes on the EULA or other text of the contract. If, for example, the user decides to talk to another person while the user is supposed to read the EULA, eye tracking with the camera 2 will detect that the user has averted his or her gaze from the computer screen and has looked at the person being addressed by the user instead of continuing to look at the screen display. This and other actions would go unnoticed by the verification system if a simple timer would be used before the first computer object becomes activated.

While not as effective as the solution using eye tracking, a possible embodiment of the method may encompass the use of a timer to ensure a certain minimum amount of time has been spent in front of the EULA.

A further preferred method is taking still images or video sequences with the camera. These still images or video sequences can comprise certain positions of the head or motions of the head into certain position, like a nod (bending neck and head forward), turning the face to one side, i.e. left or right. Further, in combination with eye tracking, the positions or motions of the head may comprise holding the head in one of the positions described above while directing the gaze into a certain direction or directing the gaze sequentially into a number of directions, like left, up or down. Another predetermined sequence may encompass moving the head while keeping the gaze directed to the screen.

Another additional preferred method comprises combinations of the method described in the preceding paragraph with hand motions. These motions of the hand may encompass touching your nose, touching the left or right ear, putting your hand on your forehead or any combinations of the above. If the camera allows a larger field of view, motions of the shoulder like shrugging can also be used by the verification system.

In another preferred embodiment, the verification system saves an image by the camera, i.e. the first acquired dataset in the course of the step of activating the first computer object. Thus, the activation the first computer object may also encompass that the verification system saves the image taken by the camera, i.e. the first acquired dataset in nonvolatile memory. This is done for documentation purposes. In case of later discussions or other situations where the verification process has to be reviewed, the identity of the user can be verified by the provider simply by retrieving the saved image of the user. This information can be enhanced by location data, like GPS, cell phone location, WLAN or other wireless or wired connection data. Time and date and other information may also be stored.

In a further preferred embodiment, the verification system may also save fingerprint data, i.e. the second acquired dataset. These processes of saving acquired datasets and maybe other data are useful for documentation. So, at later times, proof is available that it has indeed been the correct user who has been verified by the verification system.

In a further embodiment of the method, the second computer object may comprise detection if the camera is blocked or if the image obtained by the camera is not clear, e.g. if the lens of the camera 2 is covered by condensing humidity.

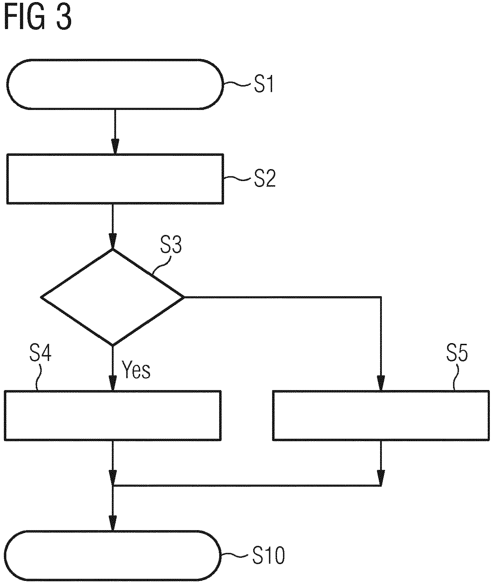

Fig. 3 is a flowchart of the method of the present disclosure as it is performed by the verification system. The method starts in step S1. First, it obtains the first acquired dataset 3 in step S2. Next, the verification system compares this first acquired dataset 3 with the first predetermined dataset 11. If these datasets agree, the verification system activates the first computer object 5 in step S4. In the other case, if these datasets are dissimilar, the verification system activates the second computer object 9 in step S5. Coming either from step S4 or from step S5, the verification system stops in step S10.

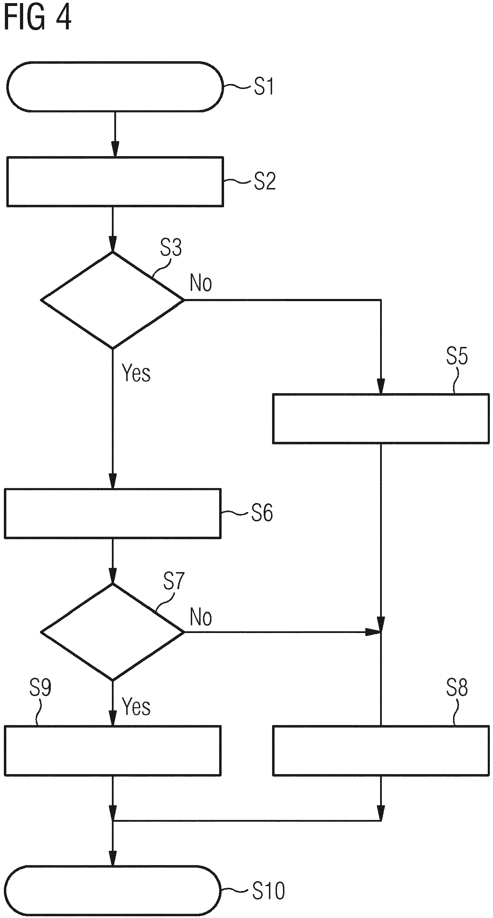

Fig. 4 is a flowchart of an extension of the method of Fig. 3. Method steps S1 to S3 and step S5 are identical to the steps as they were shown in Fig. 3. Instead of the step S4 in Fig. 3, the verification system obtains in step S6 a second acquired dataset 12. In step S7, the method performed on the verification system compares this second acquired dataset 12 with the second predetermined dataset 13. If the result of this second comparison is also positive, the method continues by activating the first computer object 5 in step S9.

If the first comparison in step S3 is negative, the verification system activates the second computer object 9 in step S5. This instance of the computer object 9 may contain an indication for the user that the problem lies with the first acquired dataset. Also, if the second comparison in step S7 is negative, the verification system activates the second computer object 9 in step S8. This instance of the computer object 9 may contain an indication for the user that the problem lies with the second acquired dataset or with both the first and second datasets, depending on the path by which the verification system arrived at step S8. In any case, the verification system terminates in step S10. The datasets used in the method according to Fig. 4 may be the fingerprint datasets 12, 22, 13 as shown in Figs 1 and 2.

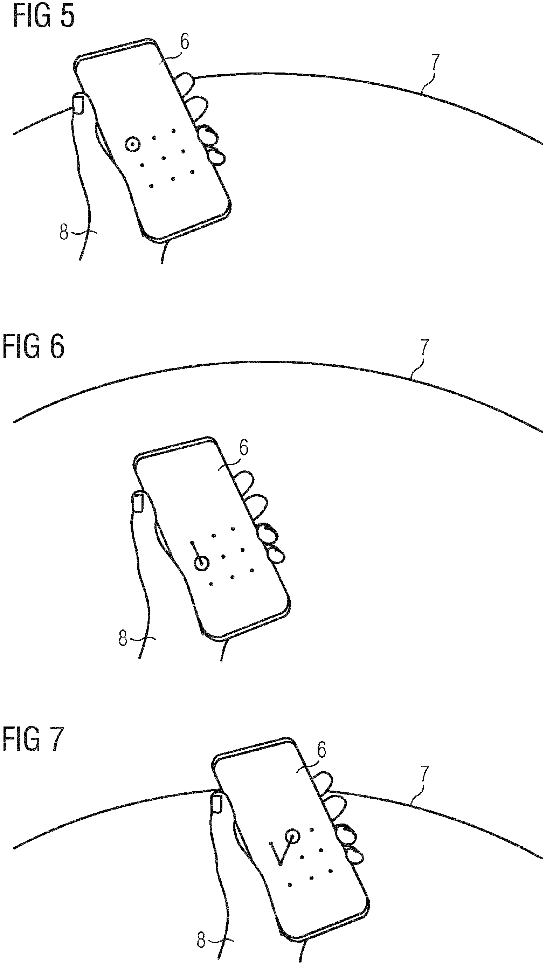

Figs 5 - 10 are depictions of another embodiment. In this embodiment, communication device 6 is a smartphone which is held in the hand 8 of the user. For reference, the edge 7 of a rounded table, above which the communication device 6 is being held, is also indicated in Figs. 5 - 10. In this embodiment, the verification system performing the method of verification of a user is the unlocking system of the smartphone.

As shown in Fig. 5, the verification system starts by displaying an unlocking pattern which, in the present example, is represented by nine dots. As a starting point, the top left dot is encircled in Fig. 5.

The user then begins the unlocking by performing a first motion. The result of this motion is depicted in Fig. 6. The hand 8 of the user holding the smartphone 6 has been moved by the user to a second position which corresponds to a second dot of the nine dot pattern. The path from the top left dot to this second dot has been indicated by a line in the display of the smartphone and the verification system performing the method has encircled the second dot.

Next, the user performs a second motion. The result of this motion is depicted in Fig. 7. The hand 8 of the user holding the smartphone 6 has been moved by the user to a third position which corresponds to a third dot of the nine dot pattern. The path from the second dot to this third dot has been indicated by a continuation of line in the display of the smartphone and the verification system performing the method has now encircled the third dot.

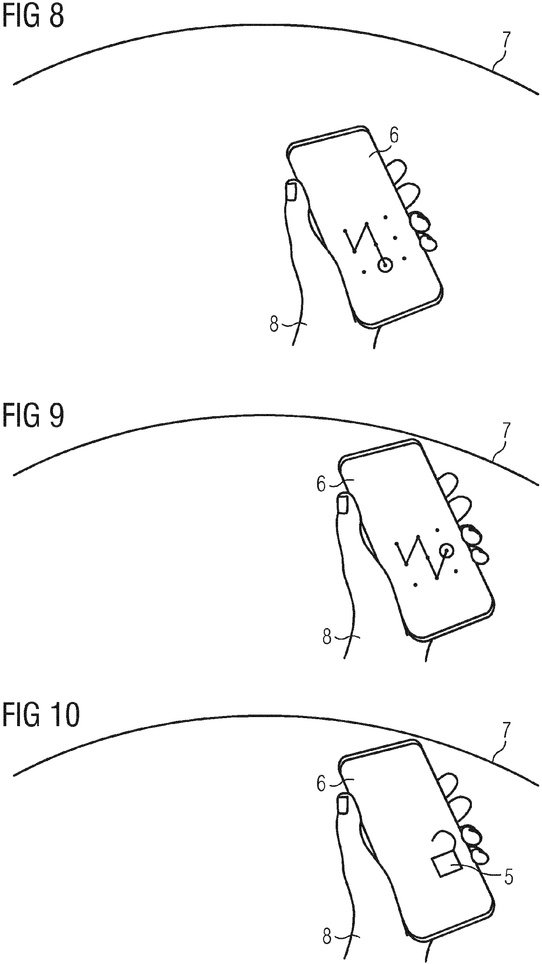

Then, the user performs a third motion. The result of this third motion is depicted in Fig. 8. The hand 8 of the user holding the smartphone 6 has been moved by the user to a fourth position which corresponds to a fourth dot of the nine dot pattern. The path from the third dot to this fourth dot has been indicated by another continuation of line in the display of the smartphone and the verification system performing the method has now encircled the fourth dot.

Then, the user performs a fourth motion. The result of this fourth motion is depicted in Fig. 9. The hand 8 of the user holding the smartphone 6 has been moved by the user to a fifth position which corresponds to a fifth dot of the nine dot pattern. The path from the fourth dot to this fifth dot has been indicated by a fourth continuation of line in the display of the smartphone and the verification system performing the method has now encircled the fifth dot.

As shown in Fig. 10, the sequence of motions has been performed correctly. The verification system has registered the sequence of motions which are described above and which have been registered by the accelerometer in the communication device 6 as the first acquired dataset. Next, the verification system compares this first acquired dataset with the first predetermined dataset. As this comparison result is positive, the verification system now causes the communication device 6 for a certain amount of time to display the symbol of a padlock which has been opened.

In the embodiment of Figs 5 - 10, the line connecting six of the nine dots which is shown in the display of the communication device 6 in Fig. 9 is represented in the first predetermined dataset. As is indicated in Figs. 5 - 9, the user has performed a sequence of motions which is recorded by a MEMS accelerometer which is integrated in the communication device 6. This sequence has been recorded by the verification system, as it is shown in Figs. 5 - 9, where in each of these Figs., a dot of the nine dot pattern has become encircled. The verification system has done this encircling of each dot as an indication of the endpoint of the current motion which should be performed by the user in order to unlock the smartphone 6.

In another preferred embodiment, the sequence of motions described by the nine dot pattern may also be performed by a user who is visually impaired. The display of the communication device 6 may, in this case, assist a user who is visually impaired by displaying large arrows indicating the direction of motion or changes in color.

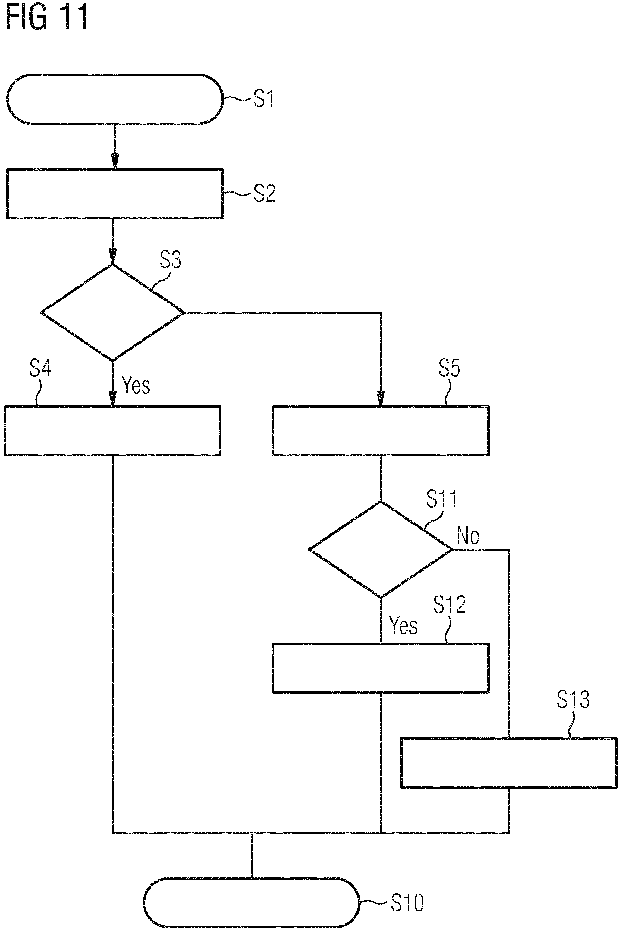

Fig. 11 is another flowchart with a representation of the method performed by the verification system. Steps S1 to S5 are the same steps as in the flowchart of Fig. 3. However, this time, in the case that the first acquired dataset 3 does not match the first predetermined dataset 11, second computer object 9 which is being activated in step S5 causes the verification system in step S11 to compare the acquired dataset 3 with an alarm dataset 15. This alarm dataset is included in the number of predetermined datasets. The purpose of this alarm dataset is to assist the user in the case that the user is coerced by criminal elements to unlock the communication device 6 or to perform money transfers or other contracts under pressure from criminal elements. This alarm dataset may cause the verification system to perform actions corresponding to the respective application. These actions caused by successful comparison in step S11 may include the notification of security forces. Other possible actions may be the deletion of data or the output of false data. These false data can be passed on to the criminal elements so that the criminal elements stop to apply pressure to the user. Other alarm sequences are also conceivable.

The advantages of the methods presented above become especially clear when compared to the possible alternative that a witness is present at the time action which is to be verified be the verification system. Such a witness would have to be made available at the time and place of the transaction to be verified. The amount of time and effort spent by a human witness has to be compared to the automated solution as it is disclosed above.

Although the present invention has been described in accordance with preferred embodiments, it is obvious for the person skilled in the art that modifications are possible in all embodiments.

## Claims

1. A method to verify a user (1) of a first computer object (5) comprising the following steps:
obtaining (S2) a first acquired dataset (3, 23) with a camera (2)
comparing (S3) the first acquired dataset (3) with a first predetermined dataset (11)
activating (S4) a first computer object (5) if the result of comparing the first dataset (3) with the predetermined dataset (11) is positive and
activating (S5) a second computer object (9) different from the first computer object (5) if the comparison of the first acquired dataset (23) with the first predetermined dataset (11) is negative.

2. The method according to claim 1, wherein the step of comparing is done by facial recognition.

3. The method according to claim 1 or 2, wherein the step of comparing is done by eye tracking.

4. The method according to one of claims 1 - 3,
wherein the first predetermined dataset (11) is a recording of a sequence of motions of the user (1).

5. The method according to claim 4, wherein motions in the sequence of motions of the user (1) are motions of a hand of the user holding a handheld device (4).

6. The method according to claim 5, wherein the motions of the hand of the user (1) are sensed by an accelerometer.

7. The method according to claim 2, wherein the first acquired dataset (3) is stored as a photographic image or a video sequence.

8. The method according to any one of claims 1 - 7, wherein in the case that the result of comparing of the dataset (3) with the predetermined dataset (11) is negative, the second computer object (9) different from the first computer object (5) is an alarm.

9. The method according to any one of claims 1 - 8 comprising the additional steps of
obtaining (S6) a second acquired dataset (12)
comparing (S7) the second acquired dataset (12) with a second predetermined dataset (13) if the result of the step (S3) of comparing of the first dataset (3) with the first predetermined dataset (11) is positive.

10. The method according to any one of claims 1 - 9, wherein if the result of the step of comparing of the dataset (3) with the first predetermined dataset (11) is positive, the first computer object (5) is activated with a time delay.

11. The method according to claim 4, wherein a user (1) who is visually impaired is performing the sequence of motions.

12. A communication device (6) which is adapted to perform a method according to one of the claims 1 - 11.

13. A computer program product containing computer executable instructions which induce the steps according to one of the claims 1 - 11.

14. A non-transitory computer-readable storage medium containing computer executable instructions,
the computer executable instructions to be loaded into a memory of a data processing device for performing the method according to one of the claims 1 - 11.
